(19) Europäisches Patentamt
European Patent Office
Office européen des brevets

(11) Numéro de publication : **0 284 477 B1**

(12) # FASCICULE DE BREVET EUROPEEN

(45) Date de publication du fascicule du brevet : **08.01.92 Bulletin 92/02**

(51) Int. Cl.[5] : **C01B 21/097**

(21) Numéro de dépôt : **88400523.2**

(22) Date de dépôt : **04.03.88**

(54) **Procédé de préparation de (dichlorophosphoryl)trichlorophosphazene sensiblement pur et incolore.**

(30) Priorité : **10.03.87 FR 8703251**

(43) Date de publication de la demande : **28.09.88 Bulletin 88/39**

(45) Mention de la délivrance du brevet : **08.01.92 Bulletin 92/02**

(84) Etats contractants désignés : **AT BE CH DE ES FR GB GR IT LI LU NL SE**

(56) Documents cités :
**US-A- 3 231 327**
**CHEMISCHE BERICHTE, Vol. 94, 1961, pages 1591-1594, Weinheim, DE; M. BECKE-GOEHRING et al.: "Ein neues Phosphornitrid-chlorid, P3NC112"**
**CHEMICAL ABSTRACTS, vol. 92, no. 8, 25 février 1980, page 694, résumé no. 68851h, Columbus, Ohio, US; V.A. GILYAROV et al.: "Preparation of (dichlorophosphinyl)phosphorimidic trichloride", & IZV AKAD. NAUK SSSR, SER. KHIM. 1979, (11), 2625-6**
**JOURNAL OF THE CHEMICAL SOCIETY (A), 1970, pages 3025-3029, Letchworth, GB; J. EMSLEY et al.: "Elucidation of the reaction of phosphorus pentachloride and ammonium chloride by phosphorus-31 nuclear magnetic resonance spectroscopy"**

(73) Titulaire : **ATOCHEM**
**4 & 8, Cours Michelet La Défense 10**
**F-92800 Puteaux (FR)**

(72) Inventeur : **Pagniez, Guy**
**2, bois de l'Eglise**
**F-64230 Poey de Lescar (FR)**
Inventeur : **Potin, Philippe**
**9 Rue des Pâquerettes**
**F-64140 Billere (FR)**

(74) Mandataire : **Rochet, Michel et al**
**ATOCHEM Département Propriété Industrielle**
**F-92091 Paris la Défense Cédex 42 (FR)**

**EP 0 284 477 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a pour objet un procédé de préparation de N(dichlorophosphoryl)trichlorophosphazène sensiblement pur et incolore.

Le brevet américain 3 231 327 décrit la préparation de N(dichlorophosphoryl)trichlorophosphazène de formule :

$$Cl_2 - \overset{\overset{\displaystyle O}{\|}}{P} - N = PCl_3 \text{ (en abrégé } P_2NOCl_5\text{)}$$

Selon ce brevet on prépare dans un premier temps $P_3NCl_{12}$ selon le schéma simplifié :

$$3PCl_5 + NH_4Cl \rightarrow (Cl_3P - N - PCl_3)^+ PCl_6^- + 4HCl$$

puis décompose $P_3NCl_{12}$ en $P_2NOCl_5$ sous l'action de $P_2O_5$.

Dans la demande de brevet français n° 86.15684, on a proposé de traiter le milieu réactionnel contenant $P_3NCl_{12}$ au moyen de $SO_2$. La technique décrite dans cette référence comprend la décomposition de $P_3NCl_{12}$ par $SO_2$ à basse température (au plus égale à environ 30°C), dans le but d'obtenir après distillation un produit final ($P_2NOCl_5$) exempt de coloration jaune, les impuretés conduisant à cette coloration perturbant la polycondensation ultérieure de $P_2NOCl_5$ en polychlorophosphazène.

Cette opération effectuée à basse température pour éviter une coloration du fait de la présence de $SO_2$ conduit à évaporer $SOCl_2$ et $POCl_3$ en conservant la même température. Cette évaporation à basse température rend nécessaire la conduite de l'opération sous un vide poussé (pression réduite à 133 Pa (1 torr) par exemple) et une condensation des vapeurs de $SOCl_2$ et $POCl_3$ à très basse température, de l'ordre de −80°C.

L'invention propose une nouvelle technique d'obtention de N(dichlorophosphoryl)trichlorophosphazène sensiblement pur et incolore. Ce procédé comprend la mise en contact de pentachlorure de phosphore et de chlorure d'ammonium en présence de $POCl_3$, le traitement du milieu réactionnel contenant $P_3NCl_{12}$ résultant de la réaction desdits produits au moyen de $SO_2$, ledit milieu étant maintenu à une température au plus égale à environ 30°C, l'élimination de $SO_2$, $POCl_3$ et $SOCl_2$ dudit milieu et la distillation de $P_2NOCl_5$ brut ainsi obtenu, ledit procédé étant caractérisé en ce que l'élimination de la plus grande partie de $SO_2$, $POCl_3$ et $SOCl_2$ est obtenue par passage du milieu les contenant dans un évaporateur en couche mince.

Plus précisément, ce procédé comprend le passage du milieu résultant du traitement au moyen de $SO_2$ sur évaporateur en couche mine en deux étapes permettant successivement l'élimination d'une part du $SO_2$ résiduel et le cas échéant d'une fraction de $SOCl_2$, et d'autre part de la totalité ou du reste de $SOCl_2$ et de $POCl_3$.

Dans ce procédé la première étape est avantageusement effectuée avec une température de paroi pouvant être comprise entre 20 et 80°C, la pression absolue pouvant être comprise entre 665 et 3990 Pa (5 et 30 torrs). Le débit du mélange réactionnel introduit dans l'évaporateur à couche mince peut être compris entre 20 et 150 $kg \cdot h^{-1} \cdot m^{-2}$, étant précisé que ces valeurs représentent un ordre de grandeur, les valeurs de débit, température et pression étant étroitement liées.

Au cours de cette première étape, la totalité de $SO_2$ est éliminée. Une fraction de $SOCl_2$ peut être également éliminée mais les vapeurs peuvent être aisément condensées à une température toujours supérieure à −40°C.

A l'issue de la première étape, le mélange réactionnel est à nouveau introduit dans un évaporateur à couche mince dans des conditions permettant l'élimination quasi totale de $SOCl_2$ et $POCl_3$. A cette fin, la température de paroi est avantageusement comprise entre 100 et 180°C, et de préférence entre 120 et 140°C, la pression absolue pouvant être comprise entre 665 et 2660 Pa (5 et 20 torrs). Les valeurs de débit données précédemment sont applicables à cette seconde étape, ainsi que le commentaire relatif aux relations débit/température/pression. A titre purement informatif, une pression de 665 et 931 Pa (5 à 7 torrs) — permettant d'éviter un chauffage à haute température — est suffisante s'il est possible de condenser les vapeurs à −30°C.

Les évaporateurs en couche mince utilisables dans le procédé conforme à l'invention sont en eux-mêmes connus et ne constituent pas de ce fait, un objet de l'invention. Un exemple d'appareil de ce type, donné à titre purement illustratif, est constitué par une colonne chauffée extérieurement, dans laquelle un axe central muni de raclettes distribue le produit à évaporer sous forme de film mince sur la paroi chaude de ladite colonne.

De même les conditions de préparation du milieu réactionnel contenant $P_3NCl_{12}$, et en particulier les conditions de réaction de $PCl_5$ et de $NH_4Cl$, de traitement au moyen de $SO_2$, et de distillation de $P_2NOCl_5$ brut ne constituent pas en elles-mêmes un objet de la présente invention. Elles sont décrites par exemple dans la demande de brevet français 86.15684.

Ainsi qu'il a été précisé, le procédé faisant l'objet de l'invention permet l'obtention de N(dichlorophosphoryl)trichlorophosphazène sensiblement pur et incolore dans des conditions douces de purification, c'est-à-dire de l'élimination de $SO_2$, de $SOCl_2$ et de $POCl_3$.

L'exemple suivant illustre l'invention.

EXEMPLE

On introduit successivement dans un réacteur :

17,128 kg (82,15 moles) de $PCl_5$

1,383 kg (25,85 moles) de $NH_4Cl$

18,651 kg de $POCl_3$

L'ensemble est porté à la température de reflux du solvant et maintenu sous agitation à cette température pendant 2 heures.

On ajoute ensuite dans le milieu 3,892 kg (60,81 moles) de $SO_2$ (excès de 8,02%) en 300 mn, en maintenant la température au-dessous de 20°C.

Le mélange réactionnel parfaitement incolore est envoyé sur un évaporateur à couche mince constitué d'une colonne verticale en verre, chauffée par l'extérieur, et, équipée intérieurement d'un axe central portant des raclettes. En tournant, ce système raclant étale la solution à évaporer sous forme de film mince. La surface de la paroi chaude est de 0,1 m².

Le vide est assuré par une pompe à anneau liquide munie d'un éjecteur et fonctionnant avec une solution de soude à 15% destinée à neutraliser le $SO_2$ évaporé et d'éventuels incondensables acides.

Les paramètres de réglage de cet ensemble sont les suivants :

| | |
|---|---|
| — vitesse de rotation du système raclant | = 800 t/mn |
| — température de la paroi chaude | = 60°C |
| — pression absolue | = 1995 Pa (15 torrs) |
| — température du condenseur de vapeurs | = −20°C |
| — débit d'alimentation en mélange réactionnel | = 5 kg/h. |

Lors de ce premier passage on recueille en sortie de condenseur 288,64 g de $SO_2$ et 2110 g de $SOCl_2$, soit 32,4% de la quantité contenue dans le mélange réactionnel. La solution recueillie à la base de la colonne d'évaporation est parfaitement incolore.

Cette solution est recyclée sur la colonne avec les paramètres de réglage suivants :

| | |
|---|---|
| — vitesse de rotation du système raclant | = 800 t/min |
| — température de la paroi chaude | = 120°C |
| — pression absolue | = 931 Pa (7 torrs) |
| — température du condenseur de vapeurs | = −25°C |
| — débit d'alimentation en solution | = 7,5 kg/h. |

On recueille à la base de la colonne d'évaporation 7,179 kg de $P_2NOCl_5$ brut incolore, ne contenant que 3% de $POCl_3$.

Ce produit brut est distillé dans les conditions suivantes :

| | |
|---|---|
| — température du fluide de chauffe | = 130°C |
| — température du bouilleur | = 115°C |
| — température de tête | = 87°C |
| — pression | = 66,5 Pa (0,5 torrs) |

On opère avec un taux de reflux de 5 pendant les 5 premiers % de distillation, et un taux de reflux de 1 jusqu'à l'arrêt des vapeurs de $P_2NOCl_5$. Le total du distillat représente 92,7% de la masse introduite dans le bouilleur, soit 87,55% par rapport au $PCl_5$ de départ.

Les premiers 5% présentent une légère teinte jaune. Le reste du distillat est parfaitement incolore et le reste après 2 semaines de stockage sous azote.

## Revendications

1. Procédé de préparation de N(dichlorophosphoryl)trichlorophosphazène comprenant la mise en contact de pentachlorure de phosphore et de chlorure d'ammonium en présence de $POCl_3$, le traitement du milieu réactionnel contenant $P_3NCl_{12}$ résultant de la réaction desdits produits au moyen de $SO_2$, ledit milieu étant maintenu à une température au plus égale à environ 30°C, l'élimination de $SO_2$, $POCl_3$ et $SOCl_2$ dudit milieu et la distillation de $P_2NOCl_5$ brut ainsi obtenu, ledit procédé étant caractérisé en ce que l'élimination de la plus grande partie de $SO_2$, $POCl_3$ et $SOCl_2$ est obtenue par passage du milieu les contenant dans un évaporateur en couche mince.

2. Procédé selon la revendication 1, caractérisé en ce que ledit procédé comprend le passage du milieu résultant du traitement au moyen de $SO_2$ sur évaporateur en couche mince en deux étapes permettant successivement l'élimination d'une part du $SO_2$ résiduel et le cas échéant d'une fraction de $SOCl_2$, et d'autre part de la totalité ou du reste de $SOCl_2$ et de $POCl_3$, la première étape étant effectuée avec une température de paroi comprise entre 20 et 80°C, sous une pression absolue comprise entre 665 et 3990 Pa et avec un débit du milieu réactionnel dans l'évaporateur compris entre 20 et 150 kg $\cdot$ $h^{-1}$ $\cdot$ $m^{-2}$ et la deuxième étape étant effectuée avec une température de paroi comprise entre 100 et 180°C, sous une pression absolue comprise entre 665 et 2660 Pa et avec un débit compris entre 20 et 150 kg $\cdot$ $h^{-1}$ $\cdot$ $m^{-2}$, lesdits débits étant rapportés à la surface de paroi de l'évaporateur.

## Claims

1. Process for the preparation of N-(dichlorophosphoryl)trichlorophosphazene, which comprises bringing phosphorus pentachloride and ammonium chloride into contact in the presence of $POCl_3$, treating the reaction medium, which contains $P_3NCl_{12}$ resulting from the reaction of said products, with $SO_2$ said medium being maintained at a temperature of at most about 30°C, removing $SO_2$, $POCl_3$ and $SOCl_2$ from said medium, and distilling the crude $P_2NOCl_5$ thus obtained, characterised in that the removal of tha major portion of $SO_2$, $POCl_3$ and $SOCl_2$ is achieved by passing the medium containing them into a thin-film evaporator.

2. Process according to Claim 1, characterised in that said process comprises passing the medium resulting from the $SO_2$ treatment over a thin-film evaporator in two steps, which makes it possible to remove in succession, on the one hand, the remaining $SO_2$ and, if desired, an $SOCl_2$ fraction and, on the other hand, the overall or remaining amount of $SOCl_2$ and $POCl_3$, the first step being carried out at a wall temperature between 20 and 80°C, under an absolute pressure between 665 and 3990 Pa and at a throughput of the reaction medium in the evaporator between 20 and 150 kg $\cdot$ $h^{-1}$ $\cdot$ $m^{-2}$ and the second step being carried out at a wall temperature between 100 and 180°C, under an absolute pressure between 665 and 2660 Pa and at a throughput between 20 and 150 kg $\cdot$ $h^{-1}$ $\cdot$ $m^{-2}$, these throughputs being based on the surface area of the evaporator wall.

## Patentansprüche

1. Verfahren zur Herstellung von N(Dichlorphosphoryl)-trichlorphosphazen, umfassend das in Kontakt bringen von Phosphorpentachlorid und Ammoniumchlorid in Gegenwart von $POCl_3$, die Behandlung des $P_3NCL_{12}$ enthaltenden Reaktionsmediums, das aus der Umsetzung dieser Produkte mittels $SO_2$ erhalten wird, das Halten des Mediums bei einer Temperatur von höchstens etwa 30°C, die Entfernung von $SO_2$, $POCl_3$ und $SOCl_2$ aus dem Medium und die Destillation des so erhaltenen, unbehandelten $P_2NOCl_5$, dadurch gekennzeichnet, daß die Entfernung des größten Teils von $SO_2$, $POCl_3$ und $SOCl_2$ mittels Durchlaufen des sie enthaltenden Mediums durch einen Dünnschichtverdampfer erreicht wird.

2. Verfahren nach Anspruch 1, dadurch gekennzeichnet, daß dieses Verfahren das Durchlaufen des aus der Behandlung mittels $SO_2$ erhaltenen Mediums durch einen Dünnschichtverdampfer in zwei Abschnitten umfaßt, so daß einerseits eine schrittweise Entfernung des restlichen $SO_2$ und gegebenenfalls der $SOCl_2$-Frak-

tion, und andererseits der Gesamtheit oder der Reste von $SOCl_2$ und $POCl_3$ möglich ist, wobei der erste Abschnitt mit einer Wandtemperatur zwischen 20 und 80°C unter einem absoluten Druck zwischen 665 und 3990 Pa und mit einem Durchsatz des Reaktionsmediums im Verdampfer zwischen 20 und 150 kg · $h^{-1}$ · $m^{-2}$ und der zweite Abschnitt mit einer Wandtemperatur zwischen 100 und 180°C unter einem absoluten Druck zwischen 665 und 2660 Pa und mit einem Durchsatz zwischen 20 und 150 kg · $h^{1}$ · $m^{-2}$, bezogen auf die Wandoberfläche des Verdampfers, durchgeführt wird.